# EUROPEAN PATENT APPLICATION

(11) **EP 3 521 254 A1**
(43) Date of publication of application: **07.08.2019**
(21) Application number: 18155306.6
(22) Date of filing: 06.02.2018
(51) Int. Cl.: C03C 17/00, C03B 33/02, C03B 33/08, C03C 21/00

(54) **METHOD FOR MANUFACTURING A COATED CHEMICALLY STRENGTHENED GLASS ARTICLE**

(71) Applicant: AGC Glass Europe, 1348 Louvain-La-Neuve (BE)
(72) Inventor: LAMBRICHT, Thomas, 1360 Perwez (BE); DRUGMAN, Sylvain, 7140 Morlanwelz (BE); CALIARO, Sébastien, 5621 Morialmé (BE); PERCHERON, Alexis, 6041 Gosselies (BE); GILLON, Xavier, 6041 Gosselies (BE)
(74) Representative: Chabou, Samia

(57) **Abstract**

The invention concerns Method of method of manufacturing a coated glass article comprising the following steps of (i) preparing a glass substrate having a first main surface and a second main surface which are opposed to each other, (ii) irradiating at least the first main surface of the glass substrate with a laser to form, on the first main surface, at least one separating line defining contour lines, for dividing at least one glass article from the glass substrate, the glass article having a shape and/or size different from the glass substrate of step a. (iii) chemically strengthening the glass substrate on which at least one separating line is formed, the separating line extends in a depth direction from the first main surface to the second main surface, (iv) separating of the at least one glass article from the glass substrate according to the at least one separating line.

According to the present invention, between the step of chemically strengthening the glass material of step c; on which the at least one separating line is formed, and the step of separating at least one glass article from the glass substrate according to the at least one separating line of step d., the glass material is submitted to a step of coating.

## Description

The present invention relates to a method of manufacturing a coated chemically strengthened glass article. More particularly, the present invention related to a method of manufacturing an improved coated strengthened pieces of glass at a requested size from a larger glass substrate.

For example, in fields of cover glass for electronic equipment, glazing for building materials, glazing for vehicles..., high strength is often required for safety reasons and to be in line with safety rules required for such glazings. Thus, the glazing is often submitted to a chemically strengthening process to obtain a glazing or cover with high stress resistance.

In the chemical strengthening treatment, alkali metal ions having an atomic diameter larger than the original atoms are introduced to the surface of the glass substrate. Therefore, a compressive stress layer is formed on the surface of the glass substrate, thereby improving the strength of the glass substrate.

In general, a chemically strengthened glass article is obtained by (I) preparing a glass substrate having a large size, (II) cutting and collecting a plurality of glass articles with a required shape and size from the glass substrate and (III) chemically strengthening the shaped glass article.

Thus, in the conventional method of manufacturing chemically strengthened glass article, many glass substrates cut in the final shape are handled to be afterwards chemically strengthened. Before being chemically strengthened, the glass substrate is prone to scratch at its end faces and sufficient careful handling is required.

According to conventional method, many pieces of glass substrate, sometimes small pieces or with complicated shape without stress resistance have to be handled before they are submitted to chemically strengthening process leading to high risk to damage the glass substrates. Furthermore, it is difficult to ensure the quality of strength mainly in the final obtained glass article and the production yield of the glass article can not be optimally controlled.

To avoid this issue, some methods have been developed such as strengthen glass having a large size before cutting glass substrate in its final shape. However with such as method, the end faces of the glass articles have not been strengthened by the initial ion exchange. Consequently, the final glass article is not very resistant to external load and may not fulfill safety requirement.

Furthermore, this issue is exacerbated when the glass substrate has to be treated, for example, when a coating or a paint has to be applied on the surface of the glass substrate.

An object of the present invention is to provide a method of manufacturing a coated glass article having a good strength on the main surface of the glass article as well as on its edges. Thus, an improved coated strengthened glass article may be produced. The risk of damaging the glass article (scratches generally occurred during storage or transportation, flaws or damages on the end faces created by chocks during handling or processing...) is significantly reduced while the process to produce the glass article is simplified.

According to the present invention, the method of manufacturing a coated glass article comprises the following steps of:
a. preparing a glass substrate having a first main surface and a second main surface which are opposed to each other,
b. irradiating at least the first main surface of the glass substrate with a laser to form, on the first main surface, at least one separating line defining contour lines, for dividing at least one glass article from the glass substrate, the glass article having a shape and/or size different from the glass substrate of step a.,
c. chemically strengthening the glass substrate on which at least one separating line is formed, the separating line extends in a depth direction from the first main surface to the second main surface,
d. separating of the at least one glass article from the glass substrate according to the at least one separating line.

According to the present invention, between the step of chemically strengthening the glass material on which the at least one separating line is formed (step c.), and the step of separating at least one glass article from the glass substrate according to the at least one separating line (step d.), the glass substrate is submitted to at least one step of coating.

Thus, the quality of the coating and the chemically strengthening is improved as well on main surfaces of the glass article as on its edge reducing the level of loss and more particularly the edge effects.

Thanks to the proposed method, a chemically strengthened coated glass article may be produced from a simple method wherein the chemically strengthening and the coating processes are consecutively applied directly on a larger glass substrate. The glass articles, following separating lines determined in function of the required size and shape of the glass article, are then separated from the large sized glass. Thus, the strengthening, the coating and the separation of the glass articles are better controlled. Also, the coating deposition by this method is much more easy as it is performed on a large sized glass panel. Therefore, the production yield are increased and manufacturing costs are reduced. Thanks to this method, a coating and painting deposition edge-to-edge is easily manufacturable.

Furthermore, the inventive method provides a mean for substantially saving consumption of coating material and glass substrate.

Furthermore, the inventive method provides a mean for obtaining a chemically strengthened coated glass article that can be cold bent. The method according to the present inventive is less expensive and more efficient than conventional method for manufacturing a coated chemically strengthened glass.

As the name indicates, cold bending is performed with the factory's natural temperature. The process starts by putting the glass into a frame that mechanically bends the glass into the desired frame shape. In the frame installation process, the glass is glued or screwed directly into the frame. The frame is then ready for installation into a vehicle or a building.

The thinner the glass, the easier it is to bend from a mechanical perspective. The shape, however, can also have a twisted design. By this method, the cold bending performances are enhanced because the end faces of the glass article are strong thanks to the ion exchange.

The cold bending is particularly appreciated for bending glass article for interior and exterior glazing part for automotive such as glass console, dashboard, trim element for door, pillars, windshields, side windows, back windows, sun roofs, separation walls, ......

According to the present invention, after the strengthening and the coating, the level of potassium on the surface of the glass article is higher than the level of potassium presents on the edges on the glass article. The level of potassium in the end faces of glass article is increased during the chemical strengthening. Therefore, the glass article's end faces are more resistant to external load / stress. Thus, faces of the glass articles that can be stressed in tension are better reinforced (in particular in cold bending) and the compression is limited in places where there is no need of compression to limit the central tension.

According to an embodiment of the present invention, the separating line extends in a depth direction from the main surface to the opposite main surface.

A plurality of separating lines are formed on the first main surface, the separating line may be made on one step or more than one step. The separating line is defined in function of the size and/or the shape of the glass article (ie final product). From the larger sized glass substrate, the contours of the glass articles are defined by the separating lines. Thus, after coating process, glass articles are separated from the large sized glass substrate according the separating /contour lines and collected.

According to one embodiment of the present invention, the separating line comprises a plurality of adjacent voids forming "a spot cutting line".

It is understood that the depth of the voids will depend on the glass thickness.

More preferably, the depth of the voids is equal to the thickness of glass substrate.

According to the present invention, the separating line and more particularly the plurality of adjacent voids is made by using a laser.

According to one embodiment of the present invention, the separating line(s) and more particularly the plurality of juxtaposed voids is made from the upper surface of the glass substrate. By the term "the upper surface of the glass substrate"; it is understood the surface of the glass surface which is not in direct contact with the support upon which the glass substrate is disposed to implement separating line(s).

According to one embodiment of the present invention, the separating line(s) and more particularly the plurality of juxtaposed voids is made from the upper surface (first main surface) of the glass substrate and the lower surface (second main surface) of the glass substrate. The separating line(s) and more particularly the plurality of juxtaposed voids may be made from the upper and the lower surfaces of the glass substrate simultaneously or separately.

Thus, when the glass substrate is submitted to a chemical strengthening and a coating, the edges of the glass articles through the separating lines are also strengthened and coated. The glass article is thus more resistant to scratches and physical stresses and more aesthetic obtained with simplified method.

At the end stage of the proposed method, the glass articles have to be separated from the mother glass panel. Different methods are possible to proceed the separation. A solution might be to initiate a crack with a mechanical equipment (diamond tool, cutting wheel, ...) in a controlled position so that the crack will propagate along the initial separating lines. In addition, creating additional voids in the vicinity of the initial separating lines will create a controlled crack propagation along the initial separating lines. Indeed, these first methods are using the inner tension inside the core of the glass panels, created by the chemical tempering process. Therefore, a first crack initiation in a appropriated position will induce the separation of the glass articles from the initial glass panel. A destruction of the initial glass panel, out of the final glass articles, give also the possibility to obtain the final glass articles without affecting its quality. Another technique to separate the glass articles from the initial glass pane is to promote the cleaving of the separation lines by inducing a thermal shock : whether heating up with a CO2 laser spot, a flame or IR heaters , or cooling down with compressed air, liquid nitrogen or other coolants solution. Also, pouring an acid solution (etching solution) onto the plurality of juxtaposed voids will induce the cleaving of the glass articles.

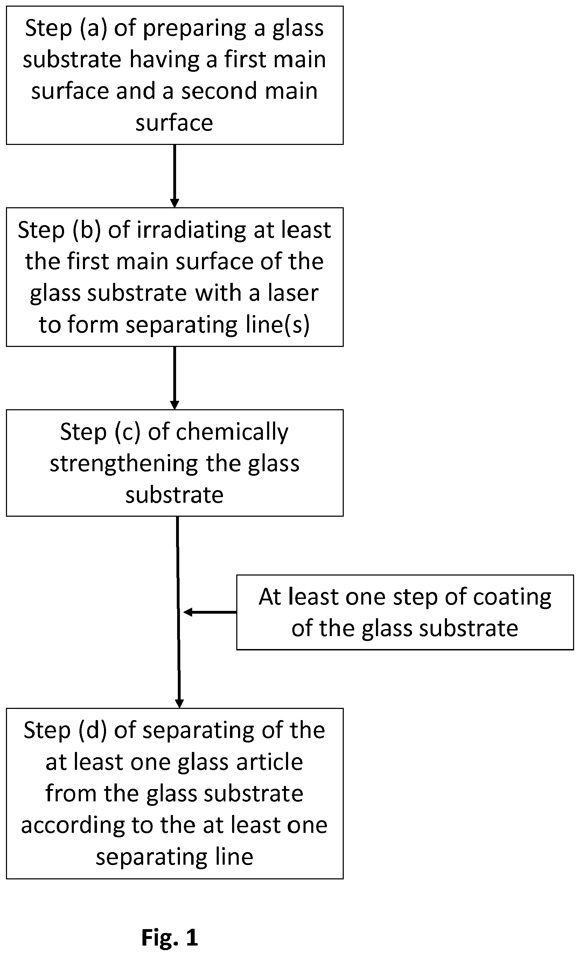

Figure 1 is a diagram schematically showing a flow of a method of manufacturing a glass article according to an embodiment of the present invention.

Hereinafter, an embodiment of the present invention will be described with reference to the Figure 1.

As shown in FIG. 1, the method of manufacturing a coated glass article comprises the following steps of
a. preparing a glass substrate having a first main surface and a second main surface which are opposed to each other,
b. irradiating at least the first main surface of the glass substrate with a laser to form, on the first main surface, at least one separating line defining contour lines, for dividing at least one glass article from the glass substrate, the glass article having a shape and/or size different from the glass substrate of step a.,
c. chemically strengthening the glass substrate on which at least one separating line is formed, the separating line extends in a depth direction from the first main surface to the second main surface,
d. separating of the at least one glass article from the glass substrate according to the at least one separating line.

According to the present invention, between the step of chemically strengthening the glass material on which the at least one separating line is formed (step c.), and the step of separating at least one glass article from the glass substrate according to the at least one separating line (step d.), the glass substrate is submitted to at least one step of coating.

According to the invention, the glass composition of the glass substrate is not particularly limited as long as its composition is suitable for chemical strengthening. The glass substrate may be, for example, soda-lime glass, aluminosilicate glass, alkali aluminosilicate glass... The glass substrate according to the invention may be a glass substrate obtained by a floating process, a drawing process, a rolling process or any other process known to manufacture a glass sheet starting from a molten glass composition. According to a preferential embodiment according to the invention, the glass substrate is a float glass substrate. The term "float glass substrate" is understood to mean a glass substrate formed by the float glass process, which consists in pouring the molten glass onto a bath of molten tin, under reducing conditions.

The glass substrate according to the invention can have a thickness varying between 0.03 and 19 mm. Advantageously, the glass substrate according to the invention may have a thickness varying between 0.03 mm to 6 mm. Preferably, for reasons of weight and to be able to cold bend easily the glass article, the thickness of the glass substrate according to the invention is from 0.1 to 2.2 mm.

According to the invention, the glass substrate may be totally or partially curved to correctly fit with the particular design of the glass article and the support if the glass article has to be cold bent.

At this stage, the glass substrate is then subjected to chemical strengthening treatment.

According to the present invention, the glass substrate is irradiated with a laser to form the at least one separating line. Preferably, the glass substrate is irradiated with a laser to form the as at least one separating line as a "spot cutting line" defined by a the line of plurality of voids formed by the laser on at least the first main surface of the glass substrate.

Here, the "separating line" means a linear or curved region formed by arranging a line of plurality of voids in a predetermined arrangement.

According to one embodiment of the present invention, the depth of the line of plurality of voids corresponds to the thickness of the glass substrate in order to easily and properly separate the at least one glass article from the glass substrate.

Depending of the thickness of the glass substrate and/or the shape and or the size of the glass article, the required depth of voids may be obtained by submitting the first main surface of the glass substrate to a laser or by submitting the first and the second main surfaces of the glass substrate to a laser or by submitting the first main surface of the glass substrate to a multiple set of laser beams, in a successive way.

The predetermined arrangement of the "separating line" is for example a plurality of surface voids arranged in a fixed direction (X direction) on the first main surface of the glass substrate, thereby forming a in-plane void region.

Each surface void corresponds to the irradiation position of the laser on the at least first main surface and has a diameter of, for example, 1 µm to 5 µm. However, the diameter of the surface void varies depending on the laser irradiation condition, the type of the glass substrate...

The center-to-center distance between adjacent surface voids is determined based on the composition and thickness of the glass substrate, laser processing condition, the shape and/or the size of the glass article... For example, the center-to-center distance between adjacent surface voids may be in the range of 2 µm to 10 µm. It should be noted that the center-to-center distance between the surface voids does not have to be equal at all positions, and may be different depending on places. the voids may be arranged at irregular intervals.

On the other hand, as described above, the line of plurality of voids (spot cutting line) may be formed by arranging one or more voids in the glass substrate from the first main surface toward the second main surface.

The shape, size, and pitch of the voids are not particularly limited. For example, the void may have a shape such as a circle, an ellipse, a rectangle, a triangle, or the like when viewed from the Y direction. Further, the maximum dimension of the void, viewed from the Y direction is, for example, in the range of 0.1 µm to 1000 µm.

According to one embodiment of the present invention, the voids constituting at least one separating line are arranged along the thickness direction (Z direction) of the glass substrate. Preferably, each void of the separating line extends in the Z direction. However, each void constituting at least one separating line may be arranged from the first main surface to the second main surface of the glass substrate inclined with respect to the Z direction. at least one separating line constituting the separating line may or may not have a void (second surface void) opened to the second main surface which is opposite to the first main surface of the glass substrate.

Thus, as described above, I the separating line is not formed as a continuous "line", but a virtual void region formed when each surface void is joined. It should be noted that it represents a linear region.

Furthermore, the separating line may be made of plurality of single parallel separating lines is arranged in an extremely close proximity to form one an aggregate of a plurality of parallel "lines".

According to one embodiment, the first main surface of the glass substrate may be first irradiated with the laser and then the second main surface is irradiated. The first and the second main surfaces may be irradiated simultaneously or separately. The required depth of the voids constituting the separating line may be obtained by repeating the laser operation through the thickness of the glass substrate.

The laser suitable for the method according to the present invention, is for example, a short pulse laser. It is preferable that such a short pulse laser beam is a burst pulse to from efficiently voids constituting the at least one separating line. Further, the average output at the irradiation time of such a short pulse laser is, for example, 30 W or more. When this average output of the short pulse laser is less than 10 W, sufficient voids may not be formed in some cases. As an example of laser light of a burst pulse, one internal void row is formed by a burst laser with a pulse number of 3 to 10, the laser output is about 90% of the rated (50 W), the burst frequency is about 60 kHz, the burst time The width is from 20 picoseconds to 165 nanoseconds. As a time width of the burst, a preferable range is from 10 nanoseconds to 100 nanoseconds.

Following the formation of the at least one separating line, the glass substrate on which the at least one separating line defining contour lines of the at least one glass article is then subjected to a chemical strengthening process.

The conditions of the chemical strengthening treatment are not particularly limited. Chemical strengthening may be carried out, for example, by dipping the glass substrate on which the at least one separating line defining contour lines of the at least one glass article in molten salt at 380 ° C. to 500 ° C. for 1 minute to 72 hours.

As the molten salt, nitrate may be used. For example, when replacing the lithium ions contained in the glass substrate with a larger alkali metal ion, a molten salt containing at least one of sodium nitrate, potassium nitrate, rubidium nitrate, and cesium nitrate may be used. Further, in the case of replacing the sodium ions contained in the glass substrate with a larger alkali metal ion, a molten salt containing at least one of potassium nitrate, rubidium nitrate, and cesium nitrate may be used. Furthermore, when replacing the potassium ion contained in the glass substrate with a larger alkali metal ion, a molten salt containing at least one of rubidium nitrate and cesium nitrate may be used.

In addition, one or more kinds of salts such as potassium carbonate may be further added to the molten salt. In this case, a low density layer having a thickness of 10 nm to 1 µm can be formed on the surface of the glass substrate.

By subjecting the glass substrate on which the at least one separating line defining contour lines of the at least one glass article to a chemical strengthening treatment, a compression stress layer can be formed on the first main surface and the second main surface of the glass substrate and on edges of the glass article. The thickness of the compressive stress layer corresponds to the penetration depth of alkali metal ions for substitution. For example, in the case of replacing sodium ions with potassium ions using potassium nitrate, the thickness of the compressive stress layer can be 8 µm to 27 µm for soda-lime glass, and the thickness of the compression stress layer for aluminosilicate glass is 10 µm to 100 µm . In the case of aluminosilicate glass, the penetration depth of alkali metal ions is preferably 10 µm or more, more preferably 20 µm or more.

Therefore, since the glass substrate has been chemically strengthened, it is easier to secure scratch-free appearance and strength of the glass article to be manufactured from the glass substrate, as compared with the conventional manufacturing method. Thus, the manufacturing yield may be increased.

Furthermore and more particularly, the glass article with its shape, after separation through separating lines, has end faces that are also chemically reinforced. Thus, a sufficient strength is be obtained for the glass article.

According to the present invention, before the at least one glass article is separated and collected from the glass substrate through the at least one separating line, the glass substrate is submitted to a coating treatment.

According to one embodiment of the invention, the glass sheet is coated with at least one transparent and electrically conducting thin layer. A transparent and conducting thin layer according to the invention can, for example, be a layer based on SnO2:F, SnO2:Sb or ITO (indium tin oxide), ZnO:Al or also ZnO:Ga.

According to another advantageous embodiment of the invention, the glass sheet is coated with at least one antireflection layer. An antireflection layer according to the invention may, for example, be a layer based on porous silica having a low refractive index or it may be composed of several layers (stack), in particular a stack of layers of dielectric material alternating layers having low and high refractive indexes and terminating in a layer having a low refractive index. A textured glass sheet may be also used. Etching or coating techniques may as well be used in order to avoid reflection.

According to another embodiment, the glass substrate is coated with at least one anti-fingerprint layer or has been treated so as to reduce or prevent fingerprints. Such a layer or such a treatment may be combined with a transparent and electrically conducting thin layer deposited on the opposite face. Such a layer may be combined with an antireflection layer deposited on the same face, the anti-fingerprint layer being on the outside of the stack and thus covering the antireflection layer.

According to another embodiment, the glass substrate is a digital or silk screen printed glass substrate, an etched glass substrate.

According to another embodiment, the glass substrate is coated with a paint/enamel, an anti-bacterial glass coating....

According to the present invention, the term "coated/coating" may be a coating as such can be a coating as such as well as a paint or a surface treatment capable of modifying the properties of surface of the glass (mechanical, chemical, opto-energetical, biological, electrical, esthetical properties...) by addition or deletion, modification physico-chemical of the surface material (at a temperature 'visible for the glass' lower than its Tg).

According to another embodiment, the glass substrate is coated with a coating chosen amongst the following list of non-exhaustive coatings: low-e coating, solar control coating, diamond like coatings, self-cleaning coatings (Tio2, ...), ion implantation coating, lacquer painting (Lacobel type), silver or dielectric coating, conductive inks, infrared transparent inks, semi-transparent inks, fluorescent or up-conversion materials, deposition of 'mesh' (silver nanowires, carbon nanotubes), (nano) laser structuration of the surface, a safety film, a double-sided adhesive, a sol-gel coating (with all their functions ie modification of the color, integration of enzymes, ...), solar type coatings and thin film etc, the acid attacks, the sanding, the engravings of surface...,

According to the applications and/or properties desired, the coating may be provided on the first and/or the second main surfaces of the glass substrate. Also, a combination of several coating may be deposited on one and/or the other face of the glass substrate as a serigraphy and a coating as such...

According to one preferred embodiment of the present invention, the glass article is provided with in face 1 (term well known for the skilled person) an anti-glare, an anti-reflective and an anti-fingerprint coatings and a multicolored serigraphy a safety film in face 2.

Once the at least one coating is applied on at least one of the first and second main surfaces of the glass substrate, the at least one glass article for which the shape is defined by at least one separating line, is separated from the glass substrate and collected from the glass substrate.

Thus, at least one coated strengthened glass article is obtained from a simplified method that can be used directly by the customer.

The at least one coated strengthened glass article obtained from the simplified method according to the present invention may cold be bended for example to have a desired and complexed shape. A complexed shaped, aesthetical and coated with some functionalities glass article may be obtained thanks to the present invention.The glass article, according to the present invention, may be used for example, in fields of cover glass for electronic equipment, glazing for building materials, glazing for vehicles..., for which high strength is often required for safety reasons and to be in line with safety rules required for such glazings.

The glass article obtained according to the present invention is particularly suitable as an interior vehicle glazing as such a console, a dashboard, car external windows, a glass trim element for which more and more complexed shaped are requested by car's manufacturers.

Thus, the present invention concerns also a glass article obtained by the method described above.

## Claims

1. Method of method of manufacturing a coated glass article comprising the following steps of:
a. preparing a glass substrate having a first main surface and a second main surface which are opposed to each other,
b. irradiating at least the first main surface of the glass substrate with a laser to form, on the first main surface, at least one separating line defining contour lines, for dividing at least one glass article from the glass substrate, the glass article having a shape and/or size different from the glass substrate of step a.
c. chemically strengthening the glass substrate on which at least one separating line is formed, the separating line extends in a depth direction from the first main surface to the second main surface,
d. separating of the at least one glass article from the glass substrate according to the at least one separating line.
**characterized in that**, between the step of chemically strengthening the glass material of step c; on which the at least one separating line is formed, and the step of separating at least one glass article from the glass substrate according to the at least one separating line of step d., the glass substrate is submitted to at least one step of coating.

2. Method according to claim 1, **characterized in that** after the strengthening and the coating, the level of potassium on the first and second main surfaces of the glass article is higher than the level of potassium presents on the edges on the glass article, and the level of potassium on the edges of the glass article is higher than on the bulk of the glass article.

3. Method according to claim 1 or 2, **characterized in that** the separating line extends in a depth direction from the main surface to the opposite main surface.

4. Method according to claims 1 to 3, **characterized in that** the separating line comprises a plurality of adjacent voids forming a spot-cutting line"

5. Method according to claims 1 to 4, **characterized in that** the method comprises further a step of cold-bending of the glass article

6. Glass article **characterized in that** is obtained according to method of claims 1 to 5.

7. Glass article according to claim 6, **characterized in that** the thickness of the glass article is in a range of 0.03 and 19 mm, more preferably in a range of 0.03 mm to 6 mm and more preferably in a range of 0.1 to 2.2 mm.

8. Glass article according to claims 6 and 7, **characterized in that** the glass article is cold-bended.

9. Glass article according to claims 6 to 8, **characterized in that** the glass article is a vehicle's interior glazing.

10. Glass article according to claim 9, **characterized in that** the glass article is vehicle's glass console, a dashboard or a trim element.

11. Glass article according to anyone of claims 6 to 9, **characterized in that** the glass article is provided with in face 1 an anti-glare, an anti-reflective and an anti-fingerprint coatings and a multicolored serigraphy and a safety film in face 2.
